# EUROPÄISCHE PATENTANMELDUNG

(11) **EP 2 537 910 A1**
(43) Veröffentlichungstag der Anmeldung: **26.12.2012**
(21) Anmeldenummer: 12172571.7
(22) Anmeldetag: 19.06.2012
(51) Int. Cl.: C09K 8/592, E21B 43/24

(54) **Verfahren zur Gewinnung von viskosem Erdöl aus einer untertätigen Lagerstätte**

(30) Priorität: 22.06.2011 EP 11170938
(71) Anmelder: Wintershall Holding GmbH, 34119 Kassel (DE)
(72) Erfinder: Stehle, Vladimir, 34119 Kassel (DE)
(74) Vertreter: Ellwanger, Arndt

(57) **Zusammenfassung**

Gegenstand der Erfindung ist ein Verfahren zur Förderung von Erdöl aus einer unterirdischen Erdöllagerstätte, in welche mindestens eine Injektionsbohrung, die über mindestens eine Perforationszone in Kontakt mit der Erdöllagerstätte steht, und mindestens eine Produktionsbohrung abgeteuft sind, umfassend Injizieren mindestens einer wässrigen Harnstofflösung in die Injektionsbohrung und Verpressen der wässrigen Harnstofflösung durch die Perforationszone in die Erdöllagerstätte, wobei die wässrigen Harnstofflösung beim Verpressen in die Erdöllagerstätte eine Temperatur von mindestens 80 °C aufweist.

## Beschreibung

Die vorliegende Erfindung betrifft ein Verfahren zur Förderung von Erdöl, insbesondere von viskosem Erdöl, aus Erdöllagerstätten, wobei zur Erhöhung der Erdölausbeute wässrige Harnstofflösung, die eine Temperatur von mindestens 80 °C aufweist, in die Lagerstätte injiziert wird. Das vorliegende Verfahren gehört zur Gruppe der Erdölfördertechnologien, die üblicherweise als Wasser-Gas-Dampf-Fluten charakterisiert werden.

In natürlichen Erdölvorkommen liegt Erdöl in Hohlräumen poröser Speichersteine vor, welche zur Erdoberfläche hin von undurchlässigen Deckschichten abgeschlossen sind. Neben Erdöl, inklusive Anteilen von Erdgas, enthält eine Lagerstätte weiterhin mehr oder weniger stark salzhaltiges Wasser. Bei den Hohlräumen kann es sich um sehr feine Hohlräume, Kapillaren, Poren oder dergleichen handeln, beispielsweise solche mit einem Durchmesser von nur ca. 1 µm; die Formation kann daneben aber auch Bereiche mit Poren größeren Durchmessers und/oder natürliche Brüche aufweisen.

Nach dem Niederbringen der Bohrung in die ölführenden Schichten fließt das Öl zunächst aufgrund des natürlichen Lagerstättendruckes zu den Förderbohrungen und gelangt eruptiv an die Erdoberfläche. Diese Phase der Erdölförderung wird vom Fachmann Primärförderung genannt. Bei schlechten Lagerstättenbedingungen, wie beispielsweise einer hohen Ölviskosität, schnell abfallendem Lagerstättendruck oder großen Fließwiderständen in den ölführenden Schichten, kommt die Eruptivförderung schnell zum Erliegen. Mit der Primärförderung können im Durchschnitt nur 2 bis 10 % des ursprünglich in der Lagerstätte vorhandenen Öles gefördert werden. Bei höher viskosen Erdölen ist eine eruptive Produktion in der Regel überhaupt nicht möglich.

Um die Ausbeute zu steigern, werden daher die so genannten sekundären Förderverfahren eingesetzt.

Das gebräuchlichste Verfahren der sekundären Erdölförderung ist das Wasserfluten. Dabei wird durch so genannte Injektionsbohrungen Wasser in die ölführenden Schichten eingepresst. Hierdurch wird der Lagerstättendruck künstlich erhöht und das Öl von den Injektionsbohrungen aus zu den Förderbohrungen gedrückt. Durch Wasserfluten kann jedoch der Ausbeutungsgrad von viskosen Erdölen nicht wesentlich gesteigert werden. Beim Wasserfluten soll im Idealfalle eine von der Injektionsbohrung ausgehende Wasserfront das Öl gleichmäßig über die gesamte Erdölformation zur Produktionsbohrung drücken. In der Praxis weist eine Erdölformation aber Bereiche mit unterschiedlich hohem Fließwiderstand auf. Neben feinporösen ölgesättigten Speichergesteinen mit einem hohen Fließwiderstand für Wasser existieren auch Bereichen mit niedrigem Fließwiderstand für Wasser, wie beispielsweise natürliche oder künstliche Brüche oder sehr permeable Bereiche im Speichergestein. Bei derartigen permeablen Bereichen kann es sich auch um bereits entölte Bereiche handeln. Beim Wasserfluten fließt das eingepresste Flutwasser naturgemäß hauptsächlich durch Fließwege mit niedrigem Fließwiderstand von der Injektionsbohrung zur Produktionsbohrung. Dies hat zur Folge, dass die feinporösen ölgesättigten Lagerstättenbereiche mit hohem Fließwiderstand nicht mehr geflutet werden, und dass über die Produktionsbohrung zunehmend mehr Wasser und weniger Erdöl gefördert wird. Der Fachmann spricht in diesem Zusammenhang von einer "Verwässerung der Produktion". Die genannten Effekte sind bei schweren bzw. viskosen Erdöle besonders ausgeprägt. Je höher die Erdölviskosität, desto wahrscheinlicher ist die schnelle Verwässerung der Produktion.

Um die Ölviskosität zu reduzieren und den Entölungsgrad zu steigern, wurden unterschiedliche Verfahren auf Basis von Dampf-Fluten, CO₂-Fluten, Gas-Wasser-Fluten und wässrige Lösungen von Chemikalien entwickelt. Diese Verfahren zeigen eine deutlich verbesserte Ausbeute im Vergleich mit den konventionellen Wasser-Fluten. Beim Dampffluten wird durch Einpressen von Heißdampf in die Lagerstätte das Erdöl erwärmt und so die Ölviskosität verringert. Wie beim Wasserfluten können aber auch Heißdampf und Dampfkondensat unerwünscht schnell durch hoch permeable Zonen von den Injektionsbohrungen zu den Produktionsbohrungen durchschlagen, und damit die Effizienz der tertiären Förderung reduzieren.

Weiterhin ist bekannt, wässrige Lösungen von Chemikalien zum Fluten zu verwenden, die bei bestimmten Bedingungen Gase generieren. Beispielsweise löst sich CO₂ im Erdöl und verringert dessen Viskosität. So offenbart beispielsweise RU 2007 113 251 A ein Verfahren, nach dem eine wässrige Harnstofflösung und Dampf zyklisch in die Lagerstätte verpresst werden. Nach der Hydrolyse des Harnstoffes in der Lagerstätte werden Gase generiert, die eine Steigerung der Entölung bewirken.

Bocksermann A., Kotscheschkov A. und Tarasov A. ("Vervollkommnung der thermischen Methoden zur Entölungssteigerung der Erdöllagerstätten", Institut für Wissenschaftliche und Technische Information; Serie: Entwicklung Öl- und Gaslagerstätten; Band 24, Moskau 1993) beschreiben ein Verfahren zur Lagerstättenentwicklung, bei dem Wasser-Fluten/Dampf-Fluten und zyklisches Verpumpen von wässriger Harnstofflösung durchgeführt wird. Unter der Wirkung der Lagerstättentemperatur und der Dampftemperatur beginnt die Hydrolyse des Harnstoffs unter Bildung von Ammoniak und Kohlendioxid, die die Entölung unterstützen und steigern. Nachteilig an diesem Verfahren ist, dass es nur in Lagerstätten mit Temperaturen von mindestens 80 °C eingesetzt werden kann und eine gleichmäßige Hydrolyse des Harnstoffs in der Lagerstätte schwer zu erreichen ist, da die Harnstofflösung auch in abgekühlte/kühlere Zonen der Lagerstätte fließen kann. Die Hydrolyse des Harnstoffs in der Lagerstätte ist nicht bzw. nur schlecht kontrollierbar.

Problematisch für die Anwendung von wässriger Harnstofflösung ist auch, dass das Temperaturfeld in einer Lagerstätte, die bereits einige Jahre entwickelt wird, meist inhomogen ist. Genaue Prognosen der Temperaturfelder sind oft unmöglich oder sehr aufwändig, so dass die Vorhersage der Wirkung der wässrigen Harnstofflösung in der Erdöllagerstätte nicht oder nur schwierig vorhersagbar ist.

Eine Schwierigkeit, die bei langzeitigem Wasser-Fluten entstehen kann, ist die Abkühlung der Injektornahzone. Üblicherweise wird eine bestimmte Menge wässriger Harnstofflösung injiziert und anschließend mit Wasser nachgeflutet, um die Harnstofflösung an Stellen in der Lagerstätte zu verschieben, die die für die Harnstoffhydrolyse erforderlichen erhöhten Temperaturen aufweisen. Wenn die um die Injektornahzone befindliche, abgekühlte Zone relativ groß ist, muss die Harnstofflösung über eine relativ große Strecke transportiert werden, bis sie Lagerstättenzonen mit den entsprechenden Temperaturen erreicht. Dabei verringert sich die Harnstoffkonzentration der injizierten Harnstofflösung durch das Nachfluten wesentlich.

Für unregelmäßige Lagerstätten ist die Vorhersage der Konzentrationsänderung der wässrigen Harnstofflösung unter Tage, die genaue Definition des Temperaturfeldes der Lagerstätte sowie der Wege, die die Flutmedien nehmen, kaum möglich. Daher ist auch der Einsatz von wässriger Harnstofflösung nach den bekannten Verfahren immer mit dem Risiko verbunden, dass ein großer Teil der injizierten wässrigen Harnstofflösung in Lagerstätten-Abschnitten landet, in denen die Harnstoffhydrolyse nicht möglich ist.

Wie vorstehend beschrieben beginnt die merkliche Thermohydrolyse von wässrigen Harnstofflösungen erst bei Temperaturen von 80 °C. Unterhalb von 80 °C läuft die Thermohydrolyse des Harnstoffs zu langsam ab, um in einer wirtschaftlich sinnvollen Zeitspanne ausreichend Ammoniak und Kohlendioxid zu bilden.

Um den Einsatz von Harnstoff auch in Erdöllagerstätten zu ermöglichen, deren Temperatur unter 80 °C liegt, wurde im Stand der Technik vorgeschlagen, die unterirdischen Formationen aufzuheizen. US 4,982,789 schlägt hierzu vor, so lange heißes Wasser oder Wasserdampf in die Lagerstätte zu injizieren, bis diese eine Temperatur aufweist, die für die Thermohydrolyse von Harnstoff ausreichend ist. Dieses Verfahren hat den Nachteil, dass die Aufheizung einer Lagerstätte mit enormen Energiekosten verbunden ist. Darüber hinaus besteht der Nachteil, dass die Erwärmung der Lagerstätte ebenfalls unregelmäßig erfolgen kann, so dass auch bei diesem Verfahren genaue Prognosen der Temperaturfelder und Vorhersagen der Wirkung der nachfolgend injizierten wässrigen Harnstofflösung in der Erdöllagerstätte äußerst schwierig und aufwändig sind.

Verfahren, bei denen abwechselnd Wasser und Gas in die Lagerstätte eingeführt wird, besitzen den Nachteil, dass das Vermischen der Gasphase mit der Flüssigphase unter Tage in der Erdöllagerstätte schwer zu realisieren ist.

Im Stand der Technik sind darüber hinaus Verfahren beschrieben, bei denen Harnstofflösungen eingesetzt werden, die bereits vor der Injektion in das Bohrloch Temperaturen aufweisen, die eine Thermohydrolyse des Harnstoffs sicherstellen.

US 5,209,295 offenbart ein Verfahren zur Erniedrigung der Viskosität von hochviskosem Erdöl in situ in einer Erdöllagerstätte durch Einpressen einer Mischung aus Wasserdampf und einer wässrigen Harnstofflösung. Die Mischung von Wasserdampf und der wässrigen Harnstofflösung kann dabei übertage oder am Bohrlochkopf hergestellt werden.

US 4,227,575 und US 4,594,609 offenbaren Verfahren zur Behandlung von Erdöllagerstätten, bei denen ebenfalls Wasserdampf, dem Harnstoff zugesetzt wurde, in Erdöllagerstätten eingepresst wird.

Nach der Lehre von US 4,227,575 wird die Erdöllagerstätte durch die Wasserdampfinjektion auf Temperaturen von mindestens 260 °C erwärmt. Hauptziel ist dabei eine Veränderung der Matrix der Erdöllagerstätte, die Montmorillonit-Tone enthält.

Diese Verfahren haben den Vorteil, dass die Thermohydrolyse des Harnstoffs sichergestellt wird. Nachteilig ist jedoch, dass die Zersetzung des Harnstoffs bereits übertage bzw. am Bohrlochkopf in erheblichem Umfang einsetzt, so dass sich bereits übertage erhebliche Mengen an Kohlendioxid und Ammoniak bilden. Ammoniak ist ein giftiges und ätzendes Gas, für dessen Handhabung übertage spezielle Sicherheitsvorkehrungen erforderlich sind, wodurch Mehrkosten im Anlagenbau entstehen. Kohlendioxid ist, insbesondere in Verbindung mit Wasserdampf, äußerst korrosiv, so dass es die Stahlteile der Erdölförderanlage angreift. Hiervon sind insbesondere die Stahlrohrträger der Bohrung betroffen, wie beispielsweise Steig- oder Injektionsrohre.

Aufgabe der Erfindung war daher, ein Verfahren zur Förderung von Erdöl aus Erdölformationen bereitzustellen, das auch in Lagerstätten mit niedrigen Temperaturen einsetzbar ist und das die Vorteile des Gas-Flutens, des Gas-Wasser-Flutens, des DampfFlutens und gegebenenfalls der Tensidwasserbehandlung vereinigt. Insbesondere soll das Verfahren zur Förderung von viskosem Erdöl geeignet sein. Eine weitere Aufgabe der vorliegenden Erfindung bestand darin, ein Verfahren bereitzustellen, durch das die Bildung des giftigen Ammoniaks und des korrosiven Kohlendioxids übertage bzw. am Bohrlochkopf weitestgehend vermieden wird.Diese Aufgabe wird gelöst durch das folgende Verfahren zur Förderung von Erdöl aus einer unterirdischen Erdöllagerstätte, in welche mindestens eine Injektionsbohrung, die über mindestens eine Perforationszone in Kontakt mit der Erdöllagerstätte steht, und mindestens eine Produktionsbohrung abgeteuft sind, umfassend Injizieren mindestens einer wässrigen Harnstofflösung in die Injektionsbohrung und Verpressen der wässrigen Harnstofflösung durch die Perforationszone in die Erdöllagerstätte, wobei die wässrige Harnstofflösung beim Verpressen in die Erdöllagerstätte eine Temperatur von mindestens 80 °C aufweist.

In einer bevorzugten Ausführungsform wird diese Aufgabe gelöst durch das folgende Verfahren zur Förderung von Erdöl aus einer unterirdischen Erdöllagerstätte, in welche mindestens eine Injektionsbohrung, die über mindestens eine Perforationszone in Kontakt mit der Erdöllagerstätte steht, und mindestens eine Produktionsbohrung abgeteuft sind, umfassend Injizieren mindestens einer wässrigen Harnstofflösung in die Injektionsbohrung und Verpressen der wässrigen Harnstofflösung durch die Perforationszone in die Erdöllagerstätte, wobei die wässrigen Harnstofflösung beim Verpressen in die Erdöllagerstätte eine Temperatur von mindestens 80 °C aufweist, dadurch gekennzeichnet, dass die mindestens eine wässrige Harnstofflösung durch elektrische und/oder induktive Heizelemente, die in der Injektionsbohrung oberhalb der Perforationszone angeordnet sind, in der Injektionsbohrung auf mindestens 80 °C erwärmt wird.

Bei Temperaturen von etwa 80 °C beginnt die merkliche Thermohydrolyse der wässrigen Harnstofflösung. Dies bedeutet, die Thermohydrolyse des Harnstoffs zu Ammoniak und Kohlendioxid läuft so schnell ab, dass in einer wirtschaftlich sinnvollen Zeitspanne ausreichend Ammoniak und Kohlendioxid gebildet werden, um die gewünschte Erhöhung der Erdölförderung zu bewirken, beispielsweise in ein bis drei Tagen. Soll die Profilmodifikation schneller erfolgen, kann die Temperatur, die die wässrige Harnstofflösung beim Verpressen aufweist, mehr als 80 °C betragen, beispielsweise mindestens 85 °C oder mindestens 90 °C.

Ein Teil der sich bei der Hydrolyse der wässrigen Harnstofflösung entwickelnden Gase löst sich im Wasser (vorwiegend Ammoniak) und bildet eine Alkali-Bank, ein anderer Teil der entstandenen Gase (vorwiegend CO₂) löst sich teilweise im Öl und der Rest der entstandenen Gase füllt die vorhandene Flüssigkeit mit Gas. Die gasgefüllte Flutflüssigkeit weist eine erhöhte Viskosität auf und unterstützt die Profilmodifikation. Die mit Gasen und Lauge angereicherte wässrige Bank wird durch die Lagerstätte verpresst. Die Bildung von Ammoniumhydroxid reduziert die Grenzflächenspannung zwischen Öl und Wasser. Da die Harnstofflösung eine so genannte "echte Lösung" mit einer gleichmäßigen Harnstoffkonzentration ist, wird sie gleichmäßig mit den bei der Hydrolyse entstehenden Gasen anreichert. Bei entsprechender Wahl der Harnstoffkonzentration in der wässrigen Lösung können somit Wasser-Gas-Mischungen in situ innerhalb der Lagerstätte generiert werden.

Das erfindungsgemäße Verfahren weist somit den Vorteil auf, dass die Hydrolyse des Harnstoffs steuerbar durchgeführt wird und die Lagerstätte mit einer Mischung aus Wasser, Ammoniak und Kohlendioxid geflutet wird. Dabei wird der Einsatz von kostspieligen Technologien für Vorbereitung und Verpumpen von Gas-Wasser-Mischungen, die üblicherweise über Tage hergestellt werden, vermieden. Das erfindungsgemäße Verfahren kann bei Ausbeuten von Lagerstätten mit unterschiedlichen Temperaturen, unterschiedlichen Mineralisierungen der Formationswasser und unterschiedlichen Speichereigenschaften eingesetzt werden.

Zu der Erfindung ist im Einzelnen das Folgende auszuführen:

Bei dem erfindungsgemäßen Verfahren zur Förderung von Erdöl handelt es sich um ein Verfahren zur sekundären oder tertiären Erdölförderung, d.h. es wird angewandt nachdem die primäre Erdölförderung aufgrund des Eigendrucks der Lagerstätte zum Erliegen gekommen ist und man den Druck in der Lagerstätte durch Einpressen von Flutmedien aufrecht erhalten muss. Dabei wird das Flutmedium, insbesondere Wasser und/oder Dampf durch mindestens eine Injektionsbohrung in Erdöllagerstätte eingepresst, und der Lagerstätte durch mindestens eine Produktionsbohrung Rohöl entnommen. Mit dem Begriff "Rohöl" ist in diesem Zusammenhang selbstverständlich nicht phasenreines Öl gemeint, sondern gemeint sind die üblichen, Öl und Formationswasser umfassenden Emulsionen, welche aus Erdöllagerstätten gefördert werden.

### Lagerstätten:

Bei den Lagerstätten kann es sich um Lagerstätten für alle Sorten von Öl handeln, beispielsweise um solche für leichtes oder für schweres Öl. Vorzugsweise wird das Verfahren zur Förderung von viskosem Erdöl eingesetzt, das eine Viskosität von mindestens 30 cP, bevorzugt von mindestens 50 cP, gemessen bei der Lagerstättentemperatur, aufweist. Erfindungsgemäß bevorzugt handelt es sich bei den Lagerstätten um Schweröllagerstätten, das heißt Lagerstätten, welche Erdöl mit einem API-Grad von weniger als 22,3° API enthalten. Aus derartigen Lagerstätten wird Erdöl in der Regel durch Einpressen von Dampf gefördert.

Die anfängliche Lagerstättentemperatur - das heißt die Temperatur vor Anwendung des erfindungsgemäßen Verfahrens- liegt üblicherweise im Bereich von 8° C bis 120 °C, bevorzugt 8° C bis 100 °C, besonders bevorzugt 8 °C bis 90 °C, ganz besonders bevorzugt bei 8 °C bis 80 °C und insbesondere bei 8 °C bis 70 °C.

Die Lagerstättentemperatur kann jedoch durch vorangegangenes Fluten mit Flutmedien verändert sein, wenn sich die Temperatur des Flutmediums von der Temperatur der Lagerstätte unterscheidet. Beispielsweise kann sich die Temperatur einer anfänglich kühleren Lagerstätte bei langzeitigem Fluten mit Dampf erhöhen, bei langzeitigem Fluten mit Wasser kann sich die Temperatur einer anfänglich wärmeren Lagerstätte erniedrigen. Dabei findet die Temperaturänderung im Wesentlichen im Bereich der Nähe der Injektionsbohrung und im Bereich zwischen der Injektions- und Produktionsbohrung der statt. Der Begriff "Bereich zwischen der Injektions- und Produktionsbohrung" bezieht sich dabei auf diejenigen Volumenelemente der Lagerstätte, durch die Strömungswege von den Injektionsbohrungen zu den Produktionsbohrungen führen, wobei die Strömungswege naturgemäß nicht geradlinig zwischen Injektions- und Produktionsbohrung verlaufen müssen. Dem Fachmann sind Methoden bekannt, wie man derartige durchströmte Volumenelemente ermitteln kann. Die Bezugspunkte zur Bestimmung des "Bereichs zwischen der Injektions- und Produktionsbohrung" sind naturgemäß nicht Produktionsbohrung und die Injektionsbohrung in ihrer gesamten Länge, sondern bei der Injektionsbohrung die Stelle der Bohrung, an der die Formulierung (F) tatsächlich aus der Injektionsbohrung in die Formation eintritt, und bei der Produktionsbohrung diejenige Stelle, an der Rohöl tatsächlich aus der Formation in die Produktionsbohrung eintritt bzw. zukünftig eintreten soll.

Erfindungsgemäß bevorzugt wird das vorliegende Verfahren eingesetzt, wenn die Temperatur in der Nähe der Injektionsbohrung und im Bereich zwischen der Injektions- und Produktionsbohrung 8 °C bis 70 °C, bevorzugt 8 °C bis 40 °C und besonders bevorzugt 8 °C bis 20 °C beträgt.

### Verfahren

Zur Ausführung des Verfahrens werden in die Erdöllagerstätten mindestens eine Produktionsbohrung und mindestens eine Injektionsbohrung abgeteuft. In der Regel wird eine Lagerstätte mit mehreren Injektionsbohrungen und mit mehreren Produktionsbohrungen versehen. Hierbei kann es sich um Bohrungen handeln, welche bereits in einem früheren Stadium der Erdölförderung genutzt wurden, beispielsweise im Zuge eines vorangehenden von Wasserflutens bzw. Dampfflutens, die Bohrungen können aber auch eigens zur Ausführung des erfindungsgemäßen Verfahrens in die Lagerstätte abgeteuft werden.

Das erfindungsgemäße Verfahren umfasst das Injizieren mindestens einer wässrigen Harnstofflösung in die mindestens eine Injektionsbohrung und Verpressen der mindestens einen wässrigen Harnstofflösung durch die mindestens eine Perforationszone in die Erdöllagerstätte, wobei die mindestens eine wässrigen Harnstofflösung beim Verpressen in die Erdöllagerstätte eine Temperatur von mindestens 80 °C aufweist, bevorzugt von mindestens 85 °C und besonders bevorzugt von mindestens 90 °C. Die wässrige Harnstofflösung wird dabei durch elektrische und/oder induktive Heizelemente, die in der Injektionsbohrung oberhalb der Perforationszone angeordnet sind, in der Injektionsbohrung auf mindestens 80 °C erwärmt.

Harnstoff wandelt sich in Gegenwart von Wasser bei der Hydrolyse gemäß der folgenden Gleichung in Ammoniak und Kohlendioxid um:

H₂N-CO-NH₂ + H₂O → 2NH₃ + CO₂.

Das entstandene Kohlendioxid löst sich teilweise im Erdöl und verringert dessen Viskosität. Der entstandene Ammoniak löst sich im in der Lagerstätte vorhandenen Wasser und bildet ein alkalisches Ammoniakpuffersystem mit einem pH-Wert von 9 bis 10. Dieses Puffersystem hat eine tensidartige Wirkung in der Lagerstätte. Durch die Gaserzeugung im Wasser und die Entstehung von Lauge bilden sich weiterhin schaumartige Strukturen, die eine Viskositätssteigerung der zum Fluten eingesetzten Wasser bewirken. Dies dient zur Profilmodifikation des Flutens und zur Ausgleichung der Flutfront. Werden zusätzlich oberflächenaktive Substanzen mit der alkalischen Bank eingesetzt, können diese eine weitere Steigerung des Entölungsgrades bewirken. Unter oberflächenaktiven Substanzen und oberflächenaktiven Komponenten werden vorliegend Stoffe verstanden, die die Oberflächenspannung von Waser herabsetzen können. Bevorzugt sind hierbei Tenside wie die nachfolgend aufgeführten nicht-ionischen, anionischen und kationischen Tenside.

Ab etwa 80 °C läuft die Thermohydrolyse der Harnstofflösung ausreichend schnell ab, um in wirtschaftlich sinnvollen Zeiträumen eine Erhöhung der Erdölförderung zu bewirken. Bedeutende Harnstoffmengen werden oberhalb der Schmelztemperatur des Harnstoffs (133 °C) umgesetzt. Bei einer Erhöhung der Temperatur auf 200 °C wird der Harnstoff in kürzerer Zeit zu 75 % zersetzt und bei sehr raschem Erhitzen auf 280 °C läuft die Reaktion fast vollständig ab. Oberhalb von 400 °C wird Harnstoff vollständig in gasförmige Komponenten überführt, das heißt, es bleiben keine festen Rückstände zurück.

Die wässrigen Harnstofflösungen werden übertage üblicherweise durch Auflösen des Harnstoffs in Wasser bereitgestellt. Gegebenenfalls können weitere Additive wie oberflächenaktive Komponenten (Tenside) und Ammoniumsalze zugegeben werden.

Üblicherweise enthält die wässrige Harnstofflösung 3 bis 79 Gew.-% Harnstoff und 21 bis 97 Gew.-% Wasser, bezogen auf das Gesamtgewicht der Harnstofflösung. Bevorzugt enthält die wässrige Harnstofflösung 20 bis 40 Gew.-% Harnstoff und 80 Gew.-% bis 60 Gew.-% Wasser, bezogen auf das Gesamtgewicht der Harnstofflösung.

Gemäß einer bevorzugten Ausführungsform enthält die wässrige Harnstofflösung Wasser und Harnstoff in einem Verhältnis von 21 bis 25 Gew.-% Wasser zu 75 bis 79 Gew.-% Harnstoff, bezogen auf das Gesamtgewicht von Wasser und Harnstoff, besonders bevorzugt in einem Verhältnis von 23,1 Gew.-% Wasser zu 76,9 Gew.-% Harnstoff. Das Gewichtsverhältnis von 23,1 Gew.-% Wasser zu 76,9 Gew.-% Harnstoff entspricht einem stöchiometrischen Verhältnis von Wasser zu Harnstoff von 1:1, dies bedeutet, der in der wässrigen Harnstofflösung enthaltene Harnstoff setzt sich mit dem darin enthaltenen Wasser vollständig zu Ammoniak und Kohlendioxid um. Enthält die wässrige Harnstofflösung weniger Harnstoff, wird das Wasser nicht vollständig umgesetzt, enthält die wässrige Lösung mehr Harnstoff, wird neben Ammoniak und Kohlendioxid noch Isocyansäure gebildet. Für eine maximale Ausbeute an Ammoniak und Kohlendioxid sollte das Verhältnis von Wasser zu Harnstoff in dem vorgenannten Bereich liegen.

Gemäß einer weiteren bevorzugten Ausführungsform enthält die wässrige Harnstofflösung 30 Gew.-% bis 34 Gew.-% Harnstoff und 70 Gew.-% bis 66 Gew.-% Wasser, bezogen auf das Gesamtgewicht der Harnstofflösung.

Eine Harnstofflösung mit 32,5 Gew.-% Harnstoff ist optimal, da bei dieser Konzentration die Lösung ein eutektisches Gemisch bildet, das bis -11°C flüssig bleibt. Dadurch vereinfacht sich die Lösungsaufbereitung, der Transport und Lagerung der Lösung. Bei Steigerung der Harnstoffkonzentration ist die Stabilität der Harnstofflösung nur durch die ständige Wärmezufuhr garantiert. Dies macht das Verfahren aufwendig und nicht rentabel, wenn die Außentemperaturen niedriger liegen.

Ein derartiges Gemisch wird unter anderem als Reduktionsmittel zur Abgasnachbehandlung von Stickoxidemission eingesetzt und ist unter der Bezeichnung Ad Blue® im Handel. Die Harnstoffkonzentration der als Reduktionsmittel eingesetzten wässrigen Harnstofflösung ist in der ISO 22241-1 mit 31,8 bis 33,2 Gew.-% Harnstoff, bezogen auf die gesamte Lösung, festgelegt. Ganz besonders bevorzugt weist die eingesetzte wässrige Harnstofflösung einen Gehalt von 31,8 bis 33,2 Gew.-% Harnstoff und 76,8 bis 78,2 Gew.-% Wasser, bezogen auf das Gesamtgewicht von Wasser und Harnstoff, auf.

Weiterhin kann die wässrige Harnstofflösung mindestens eine oberflächenaktive Komponente (Tensid) enthalten, bevorzugt 0,1 bis 5 Gew.-% mindestens eines Tensids, besonders bevorzugt 0,5 bis 1 Gew.-% mindestens eines Tendsids, bezogen auf das Gesamtgewicht der Harnstofflösung. Als oberflächenaktive Komponenten können anionische, kationische und nicht-ionische Tenside eingesetzt werden.

Gebräuchliche nicht-ionische Tenside sind beispielsweise ethoxylierte Mono-, Di- und Trialkylphenole, ethoxylierte Fettalkohole sowie Polyalkylenoxide. Neben den ungemischten Polyalkylenoxiden, bevorzugt C₂-C₄-Alkylenoxiden und phenylsubsitutierten C₂-C₄-Alkylenoxiden, insbesondere Polyethylenoxiden, Polypropylenoxiden und Poly(phenylethylenoxiden), sind vor allem Blockcopolymerisate, insbesondere Polypropylenoxid- und Polyethylenoxidblöcke oder Poly(phenylethylenoxid)-und Polyethylenoxidblöcke aufweisende Polymerisate, und auch statistische Copolymerisate dieser Alkylenoxide geeignet. Derartige Alkylenoxidblockcopolymerisate sind bekannt und im Handel z. B. unter den Namen Tetronice und Pluronic (BASF) erhältlich

Übliche anionische Tenside sind beispielsweise Alkalimetall- und Ammoniumsalze von Alkylsulfaten (Alkylrest: C₈-C₁₂), von Schwefelsäurehalbestern ethoxylierter Alkanole (Alkylrest: C₁₂-C₁₈) und ethoxylierter Alkylphenole (Alkylreste: C₄-C₁₂) und von Alkylsulfonsäuren (Alkylrest: C₁₂-C₁₈).

Geeignete kationische Tenside sind beispielsweise C₆-C₁₈-Alkyl-, Alkylaryl- oder heterozyklische Reste aufweisende, primäre, sekundäre, tertiäre oder quartäre Ammoniumsalze, Pyridiniumsalze, Imidazoliniumsalze, Oxozoliniumsalze, Morpholiniumsalze, Propyliumsalze, Sulfoniumsalze und Phosphoniumsalze. Beispielhaft seinen Dodecylammoniumacetat oder das entsprechende Sulfat, Disulfate oder Acetate der verschiedenen 2-(N,N,N-Trimethylammonium)ethylparaffinsäure-Ester, N-Cetylpyridiniumsulfat und N-Laurylpyridiniumsalze, Cetyltrimethylammoniumbromid und Natriumlaurylsulfat genannt.

Die Gegenwart der oberflächenaktiven Komponente unterstützt die Entölung und die Bildung schaumartiger Strukturen. Dabei befindet sich die oberflächenaktive Komponente bereits dort, wo in der wässrigen Lösung die Gase entstehen. Bei den bekannten Verfahren für die Schaumbildung mit seriellem Verpumpen von Wasserportionen mit oberflächenaktiven Komponenten und Verpumpen von Gasportionen kommt ein großer Teil des oberflächenaktive Substanzen enthaltenden Wassers untertage nicht mit den Gasen in Kontakt. Die Bildung einer gleichmäßigen Bank schaumartiger Strukturen in der produktiven Zone der Erdöllagerstätte ist in diesem Fall kaum möglich, da die Gase vorwiegend in die Speicheroberkantenzone der Erdöllagerstätte flüchten und die flüssige Phase (tensidhaltiges Wasser) in die solenahe Zone. Das Vermischen der Gase mit der Flüssigkeit in den Speicherzonen, die sich relativ weit von der Injektionsbohrung entfernt befinden, ist beim seriellen Verpumpen von Flüssigkeit und Gas kaum möglich. Wie bereits vorstehend erwähnt, steigert die Zugabe von Tensiden zur wässrigen Harnstofflösung die Entölung und die Bildung von schaumartigen Strukturen, insbesondere in Kombination mit der Lauge, die sich nach Hydrolyse des Harnstoffs in der Lagerstätte bildet.

Gemäß einer weiteren Ausführungsform enthält die wässrige Harnstofflösung mindestens ein Ammoniumsalz, bevorzugt 5 bis 30 Gew.-% mindestens eines Ammoniumsalzes.

Die Ammoniumsalze können beispielsweise aus Ammoniumchlorid, Ammoniumbromid, Ammoniumformiat und Ammoniumnitrat ausgewählt sein.

Mit dem bei der Hydrolyse entstehenden Ammoniak bilden die Ammoniumsalze eine alkalisches pH-Puffersystem, dies ist insbesondere von Vorteil bei Gegenwart von oberflächenaktiven Komponenten, da das alkalische pH-Puffersystem die guten Wascheigenschaften der Tenside gewährleistet.

Die Verwendung von Ammoniumformiat weist den Vorteil auf, dass Ammoniumformiat ebenfalls in Ammoniak und Ameisensäure zerfallen kann, wobei die Ameisensäure weiter in Kohlenmonoxid und Wasser zerfällt. Beispielsweise kann eine Mischung aus 20 Gew.-% Harnstoff, 26 Gew.-% Ammoniumformiat und 44 Gew.-% Wasser, im Handel als Denoxium-30 bekannt, eingesetzt werden. Diese Mischung ist besonders bevorzugt, da es einen vergleichsweise niedrigen Kristallisationspunkt von etwa -30 °C aufweist. Dies ist besonders wichtig bei Entwicklung der Lagerstätten in nördlichen Regionen, bei denen die Außentemperaturen niedrig liegen.

Gemäß einer weiteren Ausführungsform der Erfindung enthält die wässrige Harnstofflösung neben Harnstoff mindestens ein Tensid und mindestens eines der vorgenannten Ammoniumsalze. Dabei sind die jeweils vorstehend angegebenen Konzentrationsbereiche bevorzugt.

Mindestens eine der vorstehend beschriebenen wässrigen Harnstofflösung wird in die über eine Perforationszone mit der Erdöllagerstätte verbundene Injektionsbohrung injiziert und durch die Perforationszone in die Erdöllagerstätte verpresst. Im Rahmen der vorliegenden Erfindung wird "wässriger Harnstofflösung" synomnym mit "mindestens eine wässriger Harnstofflösung" verwendet.

Vorzugsweise wird die mindestens eine wässrige Harnstofflösung portionsweise seriell in die mindestens eine Injektionsbohrung injiziert und durch die mindestens eine Perforationszone in die Lagerstätte verpresst. Dies bedeutet, dass die wässrige Harnstofflösung in mehreren Portionen nacheinander, gegebenenfalls abwechselnd mit anderen Flut-Lösungen oder Flut-Wasser injiziert und in die Lagerstätte verpresst wird. Das üblicherweise eingesetzte Portionsvolumen der wässrigen Harnstofflösung hängt von den Eigenschaften der Lagerstätte und der Erdöle ab und kann beispielsweise zwischen 100 und 1.000 m³ variieren. Erfahrungsgemäß sollte die Menge des Harnstoffs in einer Portion mindestens 15 bis 20 Tonnen, berechnet als trockener Harnstoff betragen. Das Verpumpen einer derartigen Portion der wässrigen Harnstofflösung dauert normalerweise nicht länger als ein bis drei Tage. Anschließend wird weiter mit Wasser oder Dampf geflutet. Das Fluten mit wässriger Harnstofflösung kann zyklisch wiederholt werden, beispielsweise mit einem Zeitabstand von ein bis drei Monaten. Es ist auch möglich, das Flutwasser in allen Flutphasen zu erwärmen. In diesem Fall wird mit warmem Wasser/warmer, wässriger Lösung geflutet.

Die mindestens eine wässrige Harnstofflösung weist beim Verpressen in die Lagerstätte eine Temperatur von mindestens 80 °C auf.

Allgemein wird die Temperatur, die die wässrige Harnstofflösung beim Verpressen aufweist, unter Berücksichtigung der folgenden Einflussfaktoren ausgewählt:
- Temperatur der Gesteine in der Bohrlochnahzone,
- Länge des Injektionsbohrlochs,
- die Injektionsraten,
- der Temperaturgradient der Lagerstätte.

Die wässrige Harnstofflösung kann bereits mit der gewünschten Temperatur von mindestens 80 °C bereitgestellt werden, beispielsweise indem entsprechend heißes Wasser zum Ansetzen der wässrigen Harnstofflösung eingesetzt wird.

Die wässrige Harnstofflösung kann jedoch auch obertage mit einer Temperatur unterhalb von 80 °C bereitgestellt werden und anschließend in der Injektionsbohrung auf mindestens 80 °C erwärmt werden. Diese Ausführungsform ist bevorzugt. Je nach Temperatur der bereitgestellten wässrigen Harnstofflösung ist die Temperaturdifferenz zur gewünschten Temperatur beim Verpressen größer oder kleiner, das heißt es muss mehr oder weniger Energie zum Erwärmen zugeführt werden.

Erfindungsgemäß bevorzugt wird zum Herstellen der wässrigen Harnstofflösung warmes Begleitwasser verwendet, das bei der Ölförderung mit gefördert wurde. Dieses Wasser muss jedoch nicht notwendigerweise bereits eine Temperatur von mindestens 80 °C aufweisen. Bevorzugt weist das Wasser eine Temperatur unterhalb von 80 °C auf.

Gemäß einer Ausführungsform der vorliegenden Erfindung weist die Harnstofflösung beim Verpressen in die Lagerstätte eine Temperatur auf, die mindestens 80 °C beträgt, jedoch unterhalb der Siedetemperatur der Harnstofflösung liegt. Dabei hängt die Siedetemperatur der Harnstofflösung von der Konzentration und dem in der Lagerstätte herrschenden Druck ab. Die Harnstoffhydrolyse vollendet sich hierbei bevorzugt im Nahbereich der Injektionsbohrung. Diese Variante wird vorwiegend bei Entwicklung von Lagerstätten, deren Temperaturen unterhalb von 80 °C liegen, eingesetzt. Das Verfahren kann jedoch auch bei Entwicklung von Lagerstätten mit Temperaturen, die 80 °C und mehr betragen, eingesetzt werden. Hierbei ist jeweils die Temperatur der Lagerstätte direkt vor Einsatz des erfindungsgemäßen Verfahrens gemeint.

Gemäß einer weiteren Ausführungsform der vorliegenden Erfindung wird die wässrige Harnstofflösung in der Bohrung vor dem Verpressen verdampft und der entstehende Dampf bzw. das Gasgemisch in die Lagerstätte verpresst. Das heißt, die Temperatur T_{V} liegt oberhalb der Siedetemperatur der wässrigen Harnstofflösung. Bevorzugt wird die Verdampfung der wässrigen Harnstofflösung direkt in der Injektionsbohrung durchgeführt. Die Verdampfung findet dabei besonders bevorzugt oberhalb der Perforationszone statt und in die Lagerstätte wird eine Mischung aus Dampf, Kohlendioxid, Ammoniak und gegebenenfalls weitere Produkte der Harnstoffhydrolyse verpresst.

Das Erwärmen der mindestens einen wässrigen Harnstofflösung auf mindestens 80 °C kann übertage unter Einsatz konventioneller Techniken für die Wassererwärmung stattfinden. Die heiße Lösung wird in das Injektionsbohrloch injiziert und durch die Perforationszone in die Lagerstätte verpresst. Da die Transportgeschwindigkeit der heißen Lösung in der Injektionsbohrung relativ groß ist, wird die wässrige Harnstofflösung während des Injizierens und Verpressens nur unwesentlich abgekühlt. Um mögliche Abkühlungseffekte zu minimieren, können in der Injektionsbohrung auch wärmedämmende Rohre eingesetzt werden.

Die mindestens eine wässrige Harnstofflösung kann auch in der Injektionsbohrung auf mindestens 80 °C erwärmt werden. Diese Ausführungsform ist bevorzugt. Dazu können in der Injektionsbohrung geeignete Vorrichtungen angeordnet sein, bevorzugt sind in der Injektionsbohrung elektrische und/oder induktive Heizelemente oberhalb der Perforationszone angeordnet, mit denen die wässrige Harnstofflösung in der Injektionsbohrung erwärmt wird.

Bevorzugt wird die wässrige Harnstofflösung durch die elektrischen und/oder induktiven Heizelemente in der Injektionsbohrung auf mindestens 80 °C, mehr bevorzugt auf mindestens 85 °C und besonders bevorzugt auf mindestens 90 °C erwärmt.

Besonders bevorzugt wird die wässrige Harnstofflösung durch die elektrischen und/oder induktiven Heizelemente in der Injektionsbohrung zumindest teilweise verdampft. Besonders bevorzugt wird die wässrige Harnstofflösung vollständig verdampft.

In einer bevorzugten Ausführungsform kann das Verdampfen des Wassers der wässrigen Harnstofflösung, aufgrund des hohen Druckes in der Injektionsborhung, bei Temperaturen im Bereich von 200 bis 300 °C, bevorzugt 200 bis 250 °C und besonders bevorzugt 230 bis 250 °C erfolgen. Bei diesen Temperaturen wird der Harnstoff in sehr kurzer Zeit im Wesentlichen vollständig hydrolysiert.

Die vollständige Zersetzung des Harnstoffs kann jedoch auch unterhalb der Verdampfungstemperatur stattfinden.

In einer bevorzugten Ausführungsform wird die mindestens eine wässrige Harnstofflösung in der Injektionsbohrung oberhalb der Perforationszone vor dem Verpressen in die Erdöllagerstätte auf eine Temperatur im Bereich von 230 °C bis 250 °C erwärmt.

Gemäß einer bevorzugten Ausführungsform wird eine wässrige Harnstofflösung mit einem Gewichtsverhältnis von 21 bis 25 Gew.-% Wasser zu 75 bis 79 Gew.-% Harnstoff, bevorzugt von 23,1 Gew.-% Wasser zu 76,9 Gew.-% Harnstoff, bezogen auf das Gesamtgewicht von Wasser und Harnstoff durch die Heizelemente in der Injektionsbohrung so lange erwärmt/verdampft, bis der Harnstoff im Wesentlichen vollständig hydrolysiert ist, und anschließend gemeinsam mit Wasserdampf oder heißem Wasser durch die Perforationszone in die Erdöllagerstätte verpresst. "Im Wesentlichen vollständig hydrolysiert" bedeutet vorzugsweise, dass mindestens 90 % des Harnstoffs, besonders bevorzugt mindestens 95 % und ganz besonders bevorzugt mindestens 99 % des Harnstoffs hydrolysiert vorliegen, bezogen auf die Gesamtmenge des in der wässrigen Lösung enthaltenen Harnstoffs. Dazu kann die wässrige Harnstofflösung beispielsweise in der Injektionsbohrung auf Temperaturen von 150 bis 300 °C erwärmt werden. Gemäß dieser Ausführungsform enthält die wässrige Harnstofflösung bevorzugt im Wesentlichen Wasser und Harnstoff, besonders bevorzugt besteht sie aus Wasser und Harnstoff.

Bei der Verdampfung von wässrigen Harnstofflösungen der vorstehend beschriebenen Zusammensetzung wird bei der vollständigen Hydrolyse des Harnstoffs das Wasser vollständig für die Bildung von Kohlendioxid und Ammoniak verbraucht. In diesem Fall wird nur Gas in die Erdöllagerstätte verpresst (reines Gasfluten).

Die Erwärmung/Verdampfung der wässrigen Harnstofflösung erfolgt bevorzugt oberhalb der Perforationszone im unteren Bereich der Injektionsbohrung, das heißt in den unteren 50 %, bevorzugt in den unteren 30 %, besonders bevorzugt in den unteren 20 % und insbesondere in den unteren 10 %, jeweils bezogen auf die Gesamtlänge der Injektionsbohrung.

Unter der Gesamtlänge der Injektionsbohrung wird hierbei der Abschnitt (die Länge) zwischen Bohrlochkopf und Perforationszone verstanden. Bevorzugt sind somit auch die Heizelemente oberhalb der Perforationszone im unteren Bereich der Injektionsbohrung angeordnet, das heißt in den unteren 50 %, bevorzugt in den unteren 30 %, besonders bevorzugt in den unteren 20 % und insbesondere in den unteren 10 %, jeweils bezogen auf die Gesamtlänge der Injektionsbohrung.

Die mindestens eine wässrige Harnstofflösung kann auch in mehreren Schritten auf mindestens 80 °C erwärmt werden, wobei das Erwärmen die folgenden Schritte umfasst:
(a) Erwärmen der mindestens einen wässrigen Harnstofflösung auf eine Temperatur unterhalb von 80 °C, und
(b) Erwärmen der mindestens einen wässrigen Harnstofflösung auf mindestens 80 °C, bevorzugt mindestens 85 °C und besonders bevorzugt mindestens 90 °C.

In einer bevorzugten Ausführungsform wird die mindestens eine wässrige Harnstofflösung in Schritt b) auf eine Temperatur im Bereich von 200 bis 300 °C, bevorzugt 200 bis 250 °C und besonders bevorzugt 230 bis 250 °C erwärmt.

Bevorzugt wird dabei Schritt (a) außerhalb der Injektionsbohrung und Schritt (b) innerhalb der Injektionsbohrung durchgeführt wird. Ebenfalls bevorzugt wird Schritt (a) am Bohrlochkopf der Injektionsbohrung durchgeführt. Besonders bevorzugt wird Schritt (a) am Bohrlochkopf der Injektionsbohrung und Schritt (b) innerhalb der Injektionsbohrung durchgeführt. Werden nur die beiden Schritte (a) und (b) zum Erwärmen durchgeführt, handelt es sich um eine zweistufige Erwärmung.

Abhängig von der Temperatur, die wässrige Harnstofflösung beim Verpressen aufweist, beginnt die merkliche Harnstoffhydrolyse in den ersten Stunden oder den ersten Minuten nach Erreichen dieser Temperatur. Diese Zeit ist normalerweise ausreichend, um den ungewollten Beginn der intensiven Harnstoffhydrolyse innerhalb der Injektionsbohrung zu vermeiden, da die Fließgeschwindigkeit der wässrigen Harnstofflösung innerhalb der Injektionsbohrung im Vergleich zur Fließgeschwindigkeit in der Erdöllagerstätte schnell ist und die intensive Harnstoffhydrolyse daher im wesentlichen in der Bohrlochnahzone beginnt, in der die Geschwindigkeit der wässrigen Harnstofflösung stark abfällt. Dies gilt auch, wenn bereits im Injektionsbohrloch die Hydrolyse so stark beginnt, dass eine Mischung enthaltend Wasser, Harnstoff und bereits entstandene Gase in die Lagerstätte verpresst wird. Da die Hydrolyse des Harnstoffs nach dem Erreichen von mindestens 80 °C schnell anläuft, für die Vollendung jedoch einige Minuten oder gar Stunden benötigt, findet die vollständige Hydrolyse des Harnstoffs in der Nahzone der Injektionsbohrung statt.

Auch für den Fall, dass die Temperatur der Gesteine in der Bohrlochnahzone deutlich niedriger ist als die Harnstoffhydrolysetemperatur, findet die Harnstoffhydrolyse in ausreichendem Maße statt, da vergleichsweise große Massen an wässriger Harnstofflösung verpresst werden, und somit deren Abkühlungsgeschwindigkeit niedrig ist.

Neben der Zersetzung des Harnstoffs kann die Temperaturbeaufschlagung gezielt eine Verdampfung des Wassers in der wässrigen Harnstofflösung bewirken. Damit stellen sich nicht-eutektische Mischungsverhältnisse zwischen Wasser und Harnstoff ein, was zur Veränderung der Eigenschaften der wässrigen Harnstofflösung führt.

Gemäß einer weiteren Ausführungsform wird eine wässrige Harnstofflösung mit einem Gewichtsverhältnis von 21 bis 25 Gew.-% Wasser zu 75 bis 79 Gew.-% Harnstoff, bevorzugt von 23,1 Gew.-% Wasser zu 76,9 Gew.-% Harnstoff, bezogen auf das Gesamtgewicht von Wasser und Harnstoff, übertage so lange erwärmt, bis der Harnstoff im Wesentlichen vollständig hydrolysiert ist, und anschließend gemeinsam mit Wasserdampf oder heißem Wasser in die mindestens eine Injektionsbohrung injiziert und in die Lagerstätte verpresst. "Im Wesentlichen vollständig hydrolysiert" bedeutet vorzugsweise, dass mindestens 90 % des Harnstoffs, besonders bevorzugt mindestens 95 % und ganz besonders bevorzugt mindestens 99 % des Harnstoffs hydrolysiert vorliegen. Dazu kann die wässrige Harnstofflösung beispielsweise direkt am Bohrplatz in einem Behälter auf Temperaturen von 150 bis 300 °C erwärmt werden. Bei dieser Variante des erfindungsgemäßen Verfahrens sind in der Injektionsbohrung angeordnete Heizelemente überflüssig. Gemäß dieser Ausführungsform enthält die wässrige Harnstofflösung bevorzugt im Wesentlichen Wasser und Harnstoff, besonders bevorzugt besteht sie aus Wasser und Harnstoff.

Bei der Verdampfung von wässrigen Harnstofflösungen der vorstehend beschriebenen Zusammensetzung wird bei der vollständigen Hydrolyse des Harnstoffs das Wasser vollständig für die Bildung von Kohlendioxid und Ammoniak verbraucht. In diesem Fall wird nur Gas in die Erdöllagerstätte verpresst (reines Gasfluten).

Prinzipiell gilt, je höher die Harnstoffkonzentration der wässrigen Harnstofflösung, desto weniger zusätzliches und für die Hydrolyse des Harnstoffs nicht benötigtes Wasser muss mit erwärmt werden, dies spart Kosten, da sich das Volumen der wässrigen Harnstofflösung reduziert. Jedoch ist die Harnstoffkonzentration durch die mögliche Kristallisation der Harnstofflösung begrenzt und von der Temperatur abhängig.

Gemäß einer weiteren vorteilhaften Ausführungsform der vorliegenden Erfindung wird das Verfahren durchgeführt, indem mindestens eine wässrige Harnstofflösung, die lediglich die Komponenten Wasser und Harnstoff enthält, nach Erwärmen auf die Temperatur T_{V} in die Lagerstätte verpresst wird, wobei bevorzugt ist, dass zumindest die letzte Stufe des Erwärmens im Injektionsrohr mittels eines dort angeordneten Heizers erfolgt. Anschließend kann bei ausgeschaltetem Heizer im Injektionsrohr eine oder mehrere wässrige Lösungen enthaltend mindestens ein Additiv ausgewählt aus oberflächenaktiven Komponenten und Ammoniumsalzen in die Lagerstätte verpresst werden. Die wässrige Additivlösung vermischt sich in diesem Fall direkt in der Lagerstätte mit der hydrolysierenden Harnstofflösung. Das serielle Verpumpen von wässriger Harnstofflösung enthaltend lediglich Wasser und Harnstoff und wässriger Lösung mit Additiven spart Kosten und schont in Fällen, in denen Additive temperaturempfindlich sind, die Additivlösung. Die Reihenfolge des Verpumpens der einzelnen Lösungen kann unterschiedlich sein, beispielsweise
- Additivlösung (Heizer passiv) → Harnstofflösung(Heizer aktiv) → Additivlösung (Heizer passiv) oder
- Additivlösung (Heizer passiv) → Harnstofflösung (Heizer aktiv) oder
- Harnstofflösung (Heizer aktiv) → Additivlösung (Heizer passiv) oder
- Harnstofflösung (Heizer aktiv) → Additivlösung (Heizer passiv) → Harnstofflösung (Heizer aktiv).

"Heizer aktiv" bedeutet, der Heizer heizt, "Heizer passiv" bedeutet, er heizt nicht.

Zwischen den einzelnen Portionen kann auch Pufferwasser verpresst werden. Die vorstehend dargestellten möglichen Reihenfolgen können zyklisch wiederholt werden.

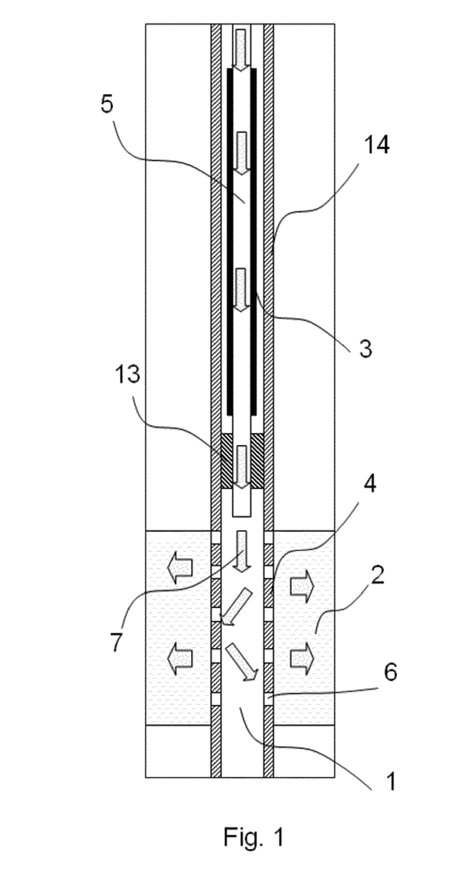

In Figur 1 ist eine typische Injektionsbohrung dargestellt, wie sie in dem erfindungsgemäßen Verfahren verwendet werden kann. Sie umfasst eine Bohrung mit einem Injektionsrohr (5), die durch Futterrohr/Casing (14a) eingefasst ist, wobei das Injektionsrohr/Steigrohr (5) durch einen so genannten Packer (13) zur Bohrung hin abgedichtet ist. In der Perforationszone (4) weist das Futterrohr (14a) Perforationslöcher (6) auf, durch die die in das Injektionsrohr injizierte Harnstofflösung (7) in die Lagerstätte (2) verpresst wird.

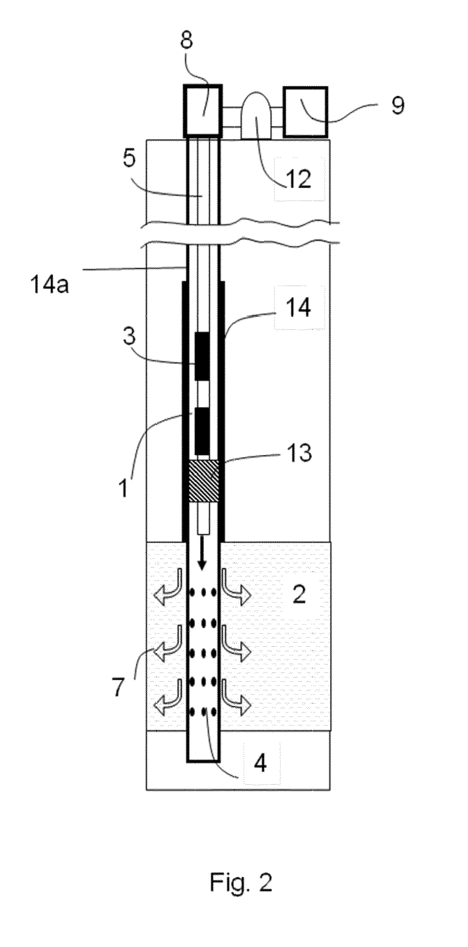

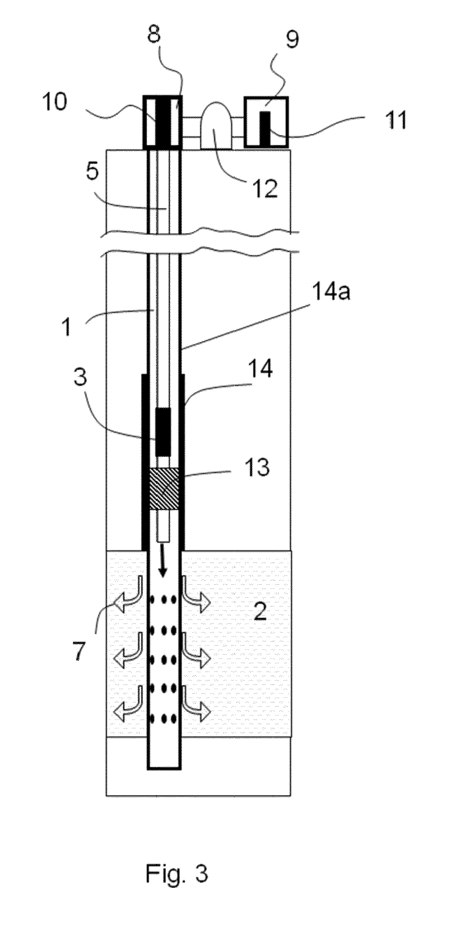

In den Figuren 2 und 3 sind zwei Injektionsbohrungen dargestellt, die für bevorzugte Ausführungsformen des vorliegenden Verfahrens eingesetzt werden können.

In Figur 2 sind um das Injektionsrohr (5) zwei Heizer/Heizelemente (3) angeordnet. Vorliegend werden die Begriffe "Heizer" und "Heizelemente" gleichbedeutend verwendet. Weiterhin ist der Bohrlochkopf (8), der Behälter (9) für die Flutlösung/Harnstofflösung und die Pumpe (12) dargestellt.

In Figur 3 ist eine Injektionsbohrung gezeigt, bei der die wässrige Harnstofflösung zweistufig erwärmt wird. So kann der Behälter für die Flutlösung/wässrige Harnstofflösung (9) ein Heizelement (11) enthalten. Ebenso kann der Injektionsbohrungskopf (8) ein Heizelement (10) umfassen. In Figur 3 ist am Injektionsrohr (5) ein Heizelement (3) angeordnet.

Gemäß einer weiteren Ausführungsform nach der Vollendung des Verpressens der Harnstofflösung bleiben die Heizer eingeschaltet und das anschließend verpresste Flutwasser wird auf mindesten 80 °C gebracht, bevorzugt auf mindestens die Temperatur, die die wässrige Harnstofflösung beim Verpressen aufwies. Damit wird die schnelle Abkühlung der erwärmten Harnstofflösung durch Vermischen mit kaltem Wasser verhindert und eine möglichst vollständige Harnstoffhydrolyse ermöglicht. Das Volumen des anschließend verpressten Flutwassers mit dieser Temperatur kann gleich dem Volumen der verpressten Harnstofflösung sein.

Das gleiche Ziel verfolgt eine weitere Ausführungsform, bei der vor und nach der mindestens einen wässrigen Harnstofflösung jeweils mindestens eine Portion Flutwasser durch die mindestens eine Injektionsbohrung injiziert und in die Lagerstätte verpresst wird, wobei das Flutwasser beim Verpressen eine Temperatur von mindestens 80 °C aufweist. Bei dieser Ausführungsform werden zwei Wärmepuffer gebildet. Der Einsatz dieser Ausführungsform ist besonders bei Entwicklung von Lagerstätten mit Temperaturen 8 bis 40 °C zweckmäßig.

Mit dem/den am Injektionsrohr angeordneten Heizelementen (3) kann die wässrige Harnstofflösung auf eine Temperatur oberhalb der Hydrolysetemperatur des Harnstoffs erwärmt werden, wobei die Temperatur unterhalb der Siedetemperatur der wässrigen Harnstofflösung liegt, die wässrige Harnstofflösung kann jedoch auch im Injektionsrohr so stark erwärmt werden, dass sie in der Injektionsbohrung verdampft. Dem Fachmann sind unterschiedliche Heizer zum Erwärmen und/oder Verdampfen von Flut-Wasser, die im Bohrloch selbst installiert werden, bekannt, siehe beispielsweise RU 2086759, RU 2198284, US 5,465,789 und US 5,323,855. Es können prinzipiell ein, aber auch mehrere Heizelemente entlang des Injektionsrohrs angebracht werden.

Beispielsweise kann ein induktives Heizelement (3), das beispielsweise als Spule mit Gehäuse ausgebildet ist, an dem Steigrohr/Injektionsrohr (5) angebracht werden, und das Steigrohr/Injektionsrohr (5) als ferromagnetischer Kern genutzt werden. Bei dem Heizer kann es sich auch um einen elektrischen Heizer handeln. Ein Heizer umfasst üblicherweise ein oder mehrere Heizelemente. Beim erfindungsgemäßen Verfahren wird bei Beginn des Flutens mit wässriger Harnstofflösung der Heizer (3) eingeschaltet, der das Injektionsrohr (5) sowie die durchfließende wässrige Harnstofflösung aufwärmt.

Durch die Perforationsöffnungen (6) wird die auf mindestens 80 °C erwärmte wässrige Harnstofflösung in die Lagerstätte verpresst. Dabei enthält die wässrige Harnstofflösung Wasser, Harnstoff, und Hydrolyseprodukte der zumindest bereits teilweise stattgefundenen Harnstoffhydrolyse umfassend Ammoniak und Kohlendioxid, sowie gegebenenfalls weiter vorhandene Additive wie Tenside und Ammoniumsalze. Falls die wässrige Harnstofflösung eine Temperatur unterhalb der Siedetemperatur der wässrigen Harnstofflösung aufweist, vollendet sich die Harnstoffhydrolyse bei dieser Ausführungsform bevorzugt im Nahbereich der Injektionsbohrung. Diese Variante wird vorwiegend bei Entwicklung von Lagerstätten mit Temperaturen, die unterhalb von 80 °C liegen, eingesetzt. Das Verfahren kann jedoch auch bei Entwicklung von Lagerstätten mit Temperaturen, die oberhalb von 80 °C liegen, eingesetzt werden. Nach Beendigung der Flutphase mit wässriger Harnstofflösung wird der Heizer (3) ausgeschaltet und die Lagerstätte mit Wasser geflutet. Das Verpumpen der wässrigen Harnstofflösung kann zyklisch wiederholt werden. Es ist auch möglich, das Flutwasser in allen Flutphasen zu erwärmen. In diesem Fall wird mit warmem Wasser/warmer, wässriger Lösung geflutet.

Das Verpumpen der wässrigen Harnstofflösung und des Flutwassers erfolgt beispielsweise mit einer konventionellen Pumpe (12), die übertage stationiert ist.

Der in Figur 3 dargestellt Aufbau eignet sich beispielsweise für die erfindungsgemäße mehrstufige Erwärmung der wässrigen Harnstofflösung. Gemäß dieser Ausführungsform der Erfindung umfasst das Erwärmen die beiden folgenden Schritte:
a) Erwärmen der wässrigen Harnstofflösung auf eine Temperatur unterhalb von 80 °C, und
b) Erwärmen der wässrigen Harnstofflösung auf mindestens 80 °C, bevorzugt mindestens 85 °C und besonders bevorzugt auf mindestens 90 °C.

Bevorzugt wird dabei Schritt a) außerhalb der Injektionsbohrung, beispielsweise im Tank (9) oder dem Bohrlochkopf der Injektionsbohrung durchgeführt und Schritt b) innerhalb der Injektionsbohrung. Dafür sind im Injektionsbohrungskopf (8) oder im Behälter (9) für die wässrige Lösung zusätzliche Heizer (10) bzw. (11) installiert. Die zweite Erwärmungsstufe wird bevorzugt direkt in der Injektionsbohrung vor dem Verpressen der Lösung in die Lagerstätte (2) mit Hilfe des Heizers (3) ausgeführt. Diese Ausführungsform weist den Vorteil auf, dass der Heizer (3) unter Tage mit minimaler elektrischer Leistung betrieben werden kann, da die notwendige Temperatursteigerung (T_{d}) der wässrigen Lösung auf die gewünschte Temperatur beim Verpressen in die Lagerstätte so klein wie möglich gehalten wird. Dies vereinfacht die Anwendung und steigert die Sicherheit der Vorrichtung, da während des Transports der Harnstofflösung im Steigrohr/Injektionsrohr (5) wenig oder kein korrosionsgefährliches Kohlendioxid generiert wird. Kohlendioxid tritt massiv nur in der Bohrlochnahzone auf. Damit ist die Korrosionsgefahr für die Bohrlochausrüstung minimal. Wenn die Harnstofflösung über Tage (beispielsweise Behälter (9) oder am Bohrlochkopf (8)) erwärmt wird, kann das Steigrohr/Injektionsrohr (5) mit einer Wärmeisolierung versehen werden.

Falls die Leistung des Heizers (3) nicht ausreichend ist, um die gewünschte Menge wässriger Harnstofflösung schnell aufzuwärmen, werden die Flutraten beim Fluten mit der wässrigen Harnstofflösung reduziert.

Um die Effizienz der Heizer (3) zu steigern, können bei Anwendung von Induktionsheizern spiralartige Rippen im Injektionsstrang fest eingebaut werden. Die Rippen sowie die entsprechenden Abschnitte des Injektionsrohrs (5) werden dabei induktiv auf Temperaturen von 100 bis 500 °C erwärmt. Dies erlaubt die Steigerung der Strömungsturbulenzen im erhitzten Abschnitt des Injektionsrohres (5) und eine schnelle Übertragung der Wärmeenergie an die wässrige Harnstofflösung. Bei einer sprunghaften Steigerung der Temperatur der wässrigen Harnstofflösung von einer Temperatur von unterhalb der Hydrolysetemperatur auf eine Temperatur oberhalb der Hydrolysetemperatur des Harnstoffs lässt sich auf diese Weise der Beginn der Harnstoffhydrolyse induzieren.

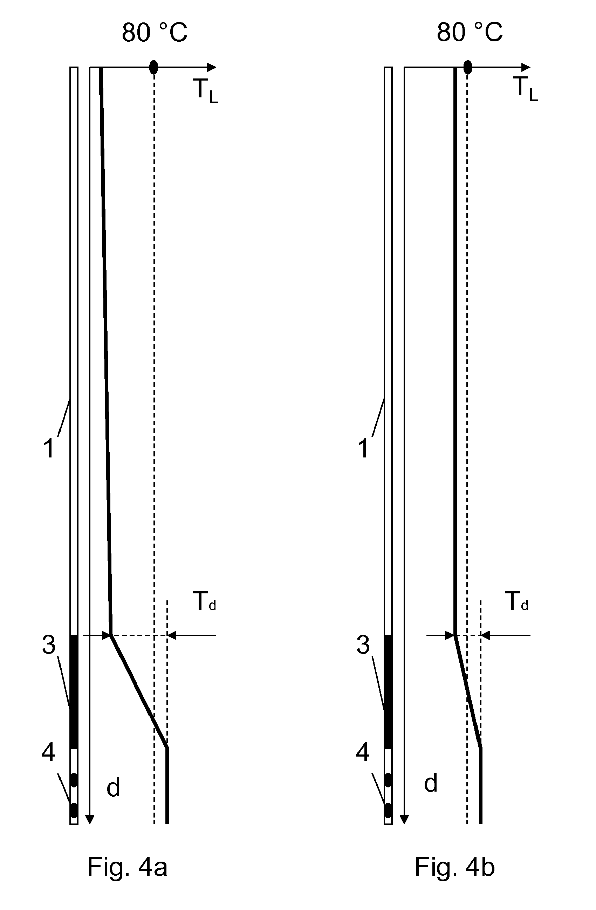

In den Figuren 4a und 4b ist der Temperaturverlauf der wässrigen Harnstofflösung entlang der Injektionsbohrung vom Bohrlochkopf bis zur Perforationszone (4) dargestellt. Der mit mit T_{L} gekennzeichnet Pfeil stellt die Temperatur der Lösung in Art einer Abszisse dar, wobei jeweils für die Temperatur 80 °C eine gestrichelte Linie eingezeichnet ist. Der mit "d" bezeichnete Pfeil senkrecht nach unten stellt ein Maß für die Tiefe der Bohrung (Teufe) dar. T_{d} bezeichnet den durch Heizer (3) hervorgerufenen Temperatursprung der wässrigen Harnstofflösung.

In Figur 4a wurde die wässrige Harnstofflösung vorher nicht erwärmt, sondern direkt in die Injektionsbohrung injiziert, wobei die Umgebungstemperatur im umgebenden Gestein höher ist, so dass die wässrige Harnstofflösung sich bis zum Erreichen des Heizers (3) leicht erwärmt. Gemäß Figur 4b wurde die wässrige Harnstofflösung auf eine Temperatur, die unterhalb der Hydrolysetemperatur des Harnstoffs liegt, jedoch deutlich höher ist als die Temperatur gemäß 4a, erwärmt. Weiterhin wurde entweder das Injektionsrohr mit einer Thermoisolierung versehen oder aber das umgebende Gestein weist eine ähnliche Temperatur wie die injizierte Harnstofflösung auf, so dass sich die Temperatur der wässrigen Harnstofflösung vom Injektionsbohrlochkopf bis zum Erreichen des Heizers (3) nicht ändert. Aus den Temperaturverläufen wird deutlich, dass bei dem in Figur 4a gezeigten Verfahren der Heizer (3) eine deutlich größere Temperatursteigerung bewirken muss als gemäß dem Verfahren nach Figur 4b.

Die Erfindung weist die folgenden Vorteile auf:
- einfache Ausführung,
- kontrollierte und vollständige Hydrolyse des Harnstoffs,
- keine Verluste des Harnstoffs in der Lagerstätte,
- keine Lagerstättentemperaturbegrenzung für den Einsatz des Verfahrens,
- Erhöhung der Entölung.

### Liste der Abbildungen

- Figur 1:: Vertikaler Schnitt einer Injektionsbohrung im unteren Bereich in der Injektionsbohrung
- Figur 2:: Vertikaler Schnitt der Injektionsbohrung bei einstufiger Erwärmung der Flutlösung
- Figur 3:: Vertikaler Schnitt der Injektionsbohrung bei zweistufiger Erwärmung der Flutlösung
- Figur 4a:: Temperaturverlauf der Flutlösung in der Injektionsbohrung bei einstufigem Erwärmungsverfahren
- Figur 4b:: Temperaturverlauf der Flutlösung in der Injektionsbohrung bei zweistufigem Erwärmungsverfahren

### Liste der verwendeten Bezugszeichen

- 1:: Injektionsbohrung
- 2:: Lagerstätte/Speicher/Träger
- 3:: Heizelemente (elektrisch oder induktiv)
- 4:: Perforationszone
- 5:: Steigrohr/Injektionsrohr
- 6:: Perforationsöffnungen
- 7:: wässrige Mischung, enthaltend Harnstoff
- 8:: Injektionsbohrungskopf
- 9:: Behälter
- 10:: Heizer am Bohrlochkopf
- 11:: Heizer im Behälter
- 12:: Pumpe
- 13:: Packer
- 14:: temperaturfeste Einfassung (beispielsweise Zementierung)
- 14a:: Futterrohr / Casing

## Patentansprüche

1. Verfahren zur Förderung von Erdöl aus einer unterirdischen Erdöllagerstätte, in welche mindestens eine Injektionsbohrung, die über mindestens eine Perforationszone in Kontakt mit der Erdöllagerstätte steht, und mindestens eine Produktionsbohrung abgeteuft sind, umfassend Injizieren mindestens einer wässrigen Harnstofflösung in die Injektionsbohrung und Verpressen der wässrigen Harnstofflösung durch die Perforationszone in die Erdöllagerstätte, wobei die wässrigen Harnstofflösung beim Verpressen in die Erdöllagerstätte eine Temperatur von mindestens 80 °C aufweist, **dadurch gekennzeichnet, dass** die mindestens eine wässrige Harnstofflösung durch elektrische und/oder induktive Heizelemente, die in der Injektionsbohrung oberhalb der Perforationszone angeordnet sind, in der Injektionsbohrung auf mindestens 80 °C erwärmt wird.

2. Verfahren gemäß Anspruch 1, **dadurch gekennzeichnet, dass** die mindestens eine wässrige Harnstofflösung portionsweise seriell in die mindestens eine Injektionsbohrung injiziert und durch die mindestens eine Perforationszone in die Lagerstätte verpresst wird.

3. Verfahren gemäß Anspruch 1 oder 2, **dadurch gekennzeichnet, dass** die mindestens eine wässrige Harnstofflösung mehrstufig auf mindestens 80 °C erwärmt wird, wobei das Erwärmen die folgenden Stufen umfasst:
(a) Erwärmen auf eine Temperatur unterhalb von 80 °C , und
(b) Erwärmen auf mindestens 80 °C.

4. Verfahren gemäß Anspruch 3, **dadurch gekennzeichnet, dass** Stufe (a) außerhalb der Injektionsbohrung und Stufe (b) innerhalb der Injektionsbohrung durchgeführt wird.

5. Verfahren gemäß einem der Ansprüche 1 bis 4, **dadurch gekennzeichnet, dass** die mindestens eine Harnstofflösung beim Verpressen in die Erdöllagerstätte eine Temperatur unterhalb der Siedetemperatur der mindestens einen Harnstofflösung aufweist.

6. Verfahren gemäß einem der Ansprüche 1 bis 4, **dadurch gekennzeichnet, dass** die mindestens eine wässrige Harnstofflösung vor dem Verpressen in die Lagerstätte in der Injektionsbohrung verdampft wird.

7. Verfahren gemäß einem der Ansprüche 1 bis 6, **dadurch gekennzeichnet, dass** vor und nach der mindestens einen wässrigen Harnstofflösung jeweils mindestens eine Portion Flutwasser durch die mindestens eine Injektionsbohrung injiziert und in die Lagerstätte verpresst wird, wobei das Flutwasser beim Verpressen jeweils eine Temperatur von mindestens 80 °C aufweist.

8. Verfahren gemäß einem der Ansprüche 1 bis 7, **dadurch gekennzeichnet, dass** die mindestens eine wässrige Harnstofflösung 3 bis 79 Gew.-% Harnstoff und 21 bis 97 Gew.-% Wasser enthält, bezogen auf das Gesamtgewicht der Harnstofflösung.

9. Verfahren gemäß einem der Ansprüche 1 bis 5, **dadurch gekennzeichnet, dass** die mindestens eine wässrige Harnstofflösung 0,1 bis 5 Gew.-% mindestens einer oberflächenaktiven Komponente enthält, bezogen auf das Gesamtgewicht der Harnstofflösung.

10. Verfahren gemäß einem der Ansprüche 1 bis 5, **dadurch gekennzeichnet, dass** die mindestens eine wässrige Harnstofflösung 5 bis 30 Gew.-% mindestens eines Ammoniumsalzes enthält, bezogen auf das Gesamtgewicht der Harnstofflösung.

11. Verfahren gemäß einem der Ansprüche 1 bis 10, **dadurch gekennzeichnet, dass** das Verhältnis von Wasser zu Harnstoff in der mindestens einen wässrigen Harnstofflösung 21 bis 25 Gew.-% Wasser zu 75 bis 79 Gew.-% Harnstoff beträgt, bezogen auf das Gesamtgewicht Wasser und Harnstoff.

12. Verfahren gemäß einem der Ansprüche 1 bis 11, **dadurch gekennzeichnet, dass** abwechselnd mit der mindestens einen wässrigen Harnstofflösung mindestens eine weitere wässrige Flutlösung enthaltend mindestens ein Additiv ausgewählt aus oberflächenaktive Komponenten und Ammoniumsalzen in die mindestens eine Injektionsbohrung injiziert und in die Lagerstätte verpresst wird.

13. Verfahren gemäß Anspruch 12, **dadurch gekennzeichnet, dass** bei Injizieren der mindestens einen weiteren Flutlösung enthaltend mindestens ein Additiv ausgewählt aus oberflächenaktive Komponenten und Ammoniumsalzen in die Injektionsbohrung und Verpressen in die Lagerstätte in der Injektionsbohrung nicht geheizt wird.

14. Verfahren gemäß einem der Ansprüche 1 bis 13, **dadurch gekennzeichnet, dass** die Heizelemente oberhalb der Perforationszone im unteren Bereich der Injektionsbohrung angeordnet sind.

15. Verfahren gemäß einem der Ansprüche 1 bis 14, **dadurch gekennzeichnet, dass** die wässrige Harnstofflösung durch die Heizelemente so lange erwärmt oder verdampft wird, bis mindestens 90 % des Harnstoffs hydrolysiert vorliegen.
